# EUROPEAN PATENT APPLICATION

(11) **EP 2 000 682 A2**
(43) Date of publication of application: **10.12.2008**
(21) Application number: 07025250.7
(22) Date of filing: 31.12.2007
(51) Int. Cl.: F16B 39/28

(54) **Method of fastening bolt and nut and fastening structure**

(30) Priority: 04.06.2007 JP 2007148138
(71) Applicant: Eco World Company, Limited, Hiroshima-shi Hiroshima 733-0003 (JP)
(72) Inventor: Migita, Hiroaki, Hiroshima-shi Hiroshima (JP)
(74) Representative: Kirschner, Klaus Dieter

(57) **Abstract**

A fastening method of a bolt (3) and a nut (1) comprises providing an inner screw (2) of a nut (1) to be inclined at a required angle against a central axis line of the nut; screwing a bolt (3) onto this inner screw (2); in an initial stage of fastening the bolt (3) and the nut (1), generating axial force in the bolt (3), when, due to rotation of the nut (1), a part of a bearing surface of the inner screw (2) of the nut sits on a part of a screw of the bolt; and enlarging the axial force proportionally to an increase in rotation angle of the nut (1) to also enlarge the sitting area. This invention also relates to a corresponding fastening structure of a bolt (3) and a nut (1).

## Description

The present invention relates to a fastening method of a bolt and a nut without causing, and a structure thereof.

Bolted joint, which is one of coupling methods used for assembling structures such as automobiles, a variety of machines, electrical apparatus, and various constructions, is widely used because of easiness of installation and removal, cheap price etc.

However, when dynamic, external force such as impact, vibration or thermal loading acts on a joint such as a bolt, a nut often start to rotationally return, so that a bolted joint loses fastening power and a fastening portion will not fulfill its function.

As the result, up to this day in the industry, many troubles still occur due to loosening of a nut and a bolt. As mentioned above, the troubles of loosening of a joint by a bolt and a nut are one of important challenges to be solved in the engineering field.

Conventionally, in every structure besides the apparatuses described above, along with bolts, nuts screwed onto the bolts are used in large amounts. Because this nut is solidly attached by strongly fastening, a superior function and effect as a fastener can be brought out. However, when a nut is used, for example, especially where vibration is applied, the nut has a drawback of loosening due to the vibration.
To solve such a drawback, there is a method that two nuts in piles are used as so-called "double nuts". When nuts are used as the double nuts in such a manner, even if the nuts are used in a place where vibration is applied, there is provided an effect that the nuts hardly loosen, compared to the case of using one single nut as conventionally.

However, use as the double nuts costs more because of requiring two nuts, compared with the case of the single nut, and also installation of them takes twice of time and labor.

The present inventors, in view of these circumstances, after a lot of assiduous ingenuity and study, at last developed a nut which was used as a single nut, but difficult to become loose even if vibration was applied, and then we were able to provide an inclined screw including a new anti-loosening mechanism, as one of approaches to solve the problem of loosening of a joint of a bolt.

Therefore, while this screw inclined nut is used as a single nut and has a form equivalent to a usual hexagonal nut, we have proposed a fastening method of a bolt and a nut in which a complicated tool or procedure are not required in fastening this nut and a bolt, and as the result, we provide a fastening structure of a bolt and a nut in which loosening does not occur even if vibration is applied, and superior productivity can be brought out.

Then, features of the present invention reside in a fastening method of a bolt and a nut in that an inner screw of a nut is provided to be inclined at a required angle against a central axis line of the nut, and a bolt is screwed onto this inner screw, and a structure thereof.

According to the method, in an initial step of fastening a bolt and a nut, a part of a bearing surface of the inner screw of the nut sits on a part of a screw of the bolt due to rotation of the nut, generating axial force in the bolt, and then the axial force is enlarged proportionally to an increase in rotation angle of the nut to enlarge a sitting area.

Another feature of the present invention resides in that the nut described above has a slit with a required width and a required depth made in the horizontal direction perpendicular to a central axis line from the side of "-" thereof.

Also as one of features of the present invention, the required angle of the inner screw of this nut is set to from 1° to 6°.

As for advantages of the present invention, there can be provided a fastening structure, having fastening means in which an inner screw of a nut is provided to be inclined at a required angle against a central axis line of the nut, and a bolt is screwed onto this inner screw, in which a screw inclined nut used in the fastening structure of a bolt and a nut of the present invention is used as a single nut and has a form equivalent to a usual hexagonal nut readily produced, a complicated tool or procedure are not required in fastening this and a bolt, loosening does not occur even if vibration is applied, and superior productivity can be brought out.

Further, owing to a nut having such inner screw made therein, a bolt does not become loose, for example, even if vibration is applied, because a center line of the inner screw is formed to be inclined at a predetermined angle against a center line of the nut, and superior productivity is brought out due to easiness of production.

That is, in the inner screw of such nut, because the center line thereof is formed to be inclined against the center line of the nut, when a bolt is screwed onto the inner screw, this anti-loosening nut is in a distorted state, and thereby a part of a bearing surface thereof will be brought into strong contact locally with a member to be attached. Accordingly, large frictional resistance is generated in the contact portion to prevent loosening from occurring.

Further, in the inner screw, it is not necessary to form an inclined bearing surface in the nut as a conventional art, and a usual nut, which is, for example, retained horizontally and in such state, may be processed with a central axis of an edged tool for forming a threaded hole being inclined at a predetermined angle against the center line of the nut, so that it is very easy to form, and thereby superior productivity can be brought out.

Further, a nut having a transverse groove formed in the direction perpendicular to the center line of the nut was able to prevent especially occurrence of loosening more efficiently. It is because the transverse groove formed causes a screw in the vicinity of the transverse groove to strongly fasten locally onto the bolt, and vibration transmitted from a bolt, a member to be attached etc. is absorbed by the transverse groove, and then the vibration is blocked from being directly transmitted, as it is, to the entire anti-loosening nut.

Further, an angle α of the center line of the inner screw against the center line of the nut described above is set to from 1 to 6 as desired, and therefore loosening can be further efficiently prevented. That is, when the predetermined angle α is smaller than 1°, inclination is too small, so that a local contact of the nut with the member to be attached becomes insufficient, and also when the angle α is not smaller than 7°, inclination is too large, so that it is difficult to fasten and screw the nut onto the bolt, and the function as a nut is lowered.

Further, a depth of the transverse groove (depth) goes up to the degree at which the transverse groove formed traverses the inner screw, and therefore a screw in the vicinity of the transverse groove can more firmly fasten locally onto the bolt, and thereby an anti-loosening effect could be more enhanced.

Embodiments of the invention are now described with reference to the drawings.
FIG. 1 is a plan view of a nut used for implementation of the present invention;
FIG. 2 is an elevation view of the nut used for implementation of the present invention;
FIG. 3 is an elevation view of a fastening structure body of a nut and a bolt;
FIG. 4 is a perspective view of a three dimensional finite element model of the fastening structure body of a nut and a bolt;
FIG. 5 is a graph illustrating the relation between a nut rotation angle and fastening axial force;
FIG. 6 is a graph illustrating the relation between the nut rotation angle and fastening torque;
FIG. 7 is a graph illustrating the relation between the axial force and the fastening torque;
FIG. 8 is a graph illustrating the relation between the nut rotation angle and the fastening axial force;
FIG. 9 is a graph illustrating the analytical results of the fastening torque and the rotation angle of the nut;
FIG. 10 is a graph illustrating the relation between the axial force and the fastening torque;
FIG. 11 is a block reference diagram illustrating a configuration and a signal flow of each apparatus;
FIG. 12 is a graph of the test results of the fastening axial force;
FIG. 13 is a graph of the test results of the fastening torque;
FIG. 14 is a graph of the test results of the relation between the fastening torque and the axial force;
FIG. 15 is a graph of the test results of the fastening axial force;
FIG. 16 is a longitudinal cross-sectional view of another nut according to the present invention;
FIG. 17 is an elevation view illustrating a fastening state of the another nut and a bolt;
FIG. 18 is a plan view of the another nut according to the present invention;
FIG. 19 is a partially cutaway plan view of a nut invented previously by the present inventors; and
FIG. 20 is a graph of an implementation article of the present invention and JIS standard nut.

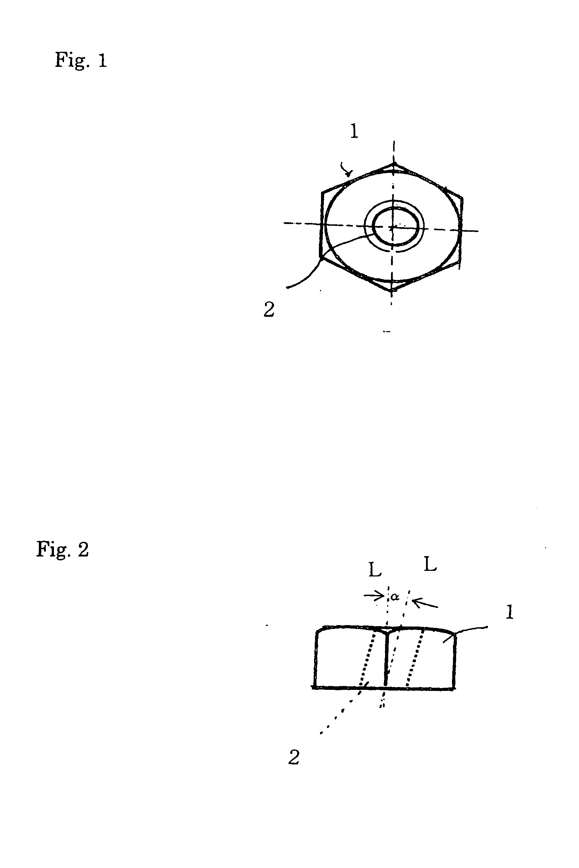

Now, a best mode of the present invention will be described. FIGS. 1, 2 show a screw inclined nut 1 used in this embodiment which has a form equivalent to a usual, flat hexagonal nut and is formed of a single material, in which an inner screw 2 is made to be inclined at an angle α of 1 to 6 against a vertical center line L of this hexagonal nut 1.

Then, a fastening structure body 4 of the present invention is completed by screwing a usual bolt 3 onto the inner nut 2 of the nut 1 described above.

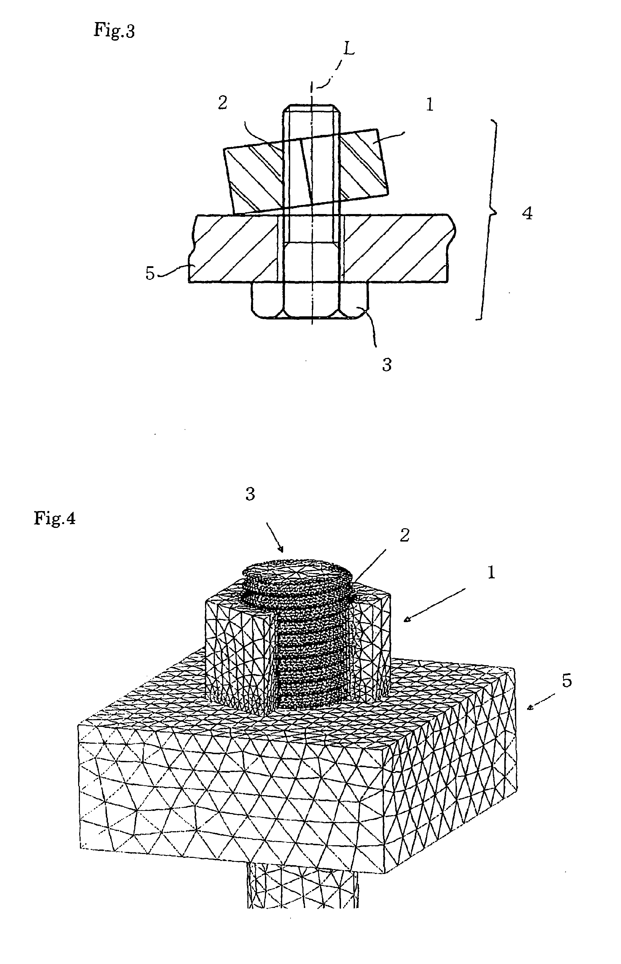

In this case, FIG. 3 shows an initial step of installation in which the nut 1 of the present invention is screwed onto the bolt 3 fitted into a member 5 to be attached, and for an article of the embodiment shown in this drawing, the nut 1 whose dimensions were shown in Table 1 was used.

**Table 1**

| A | B | d | P | D |
|---|---|---|---|---|
| Diagonal dimension | Distance between parallel planes | Nominal diameter of screw | Pitch | Height of nut |
| 27.7 mm | 24.0 mm | 16.0 mm | 2 mm | 16 mm |

Then, specifically, in the initial step of fastening the nut 1, the inclined inner screw 2 generates an inclination angle against a contact bearing surface of the bolt 3, and as fastening axial force increases, large contact force is generated in each screw portion of the bolt 3 and the inner screw 2 of the nut 1 screwed together, and as the result, tremendous anti-loosening effect of the bolt 3 and the nut 1 can be brought out.

That is, in a state of the initial installation, with applying a three dimensional finite element method, the fastening structure body 4 using the nut 1 of the present embodiment was analytically evaluated in performance. In this case, we used ADINA 8.0 known as analysis software.

Further, we decided to perform the analysis by making elasto-plastic fastening of the nut 1 into a model, using a rotation angle method. It was assumed that the bolt 3 used for this analysis had a free threaded portion of five screw threads and a grip length of 80 mm, and an object to be fastened was solid, and a bolt bearing surface and the object to be fastened would be firmly fixed to each other.

Screw dimensions of the bolt 3 and the nut 1 were according to those of a metric coarse thread with the nominal diameter of M16 in the tolerance range of 6H/6g. Further, in the analysis, the required angle of the inclined nut 1 was 1° and 1.5°. An element used was a one-dimensional tetrahedral element, and the element in a thread surface contact portion and a nut bearing surface portion was divided finer to accurately analyze the fastening torque. Then, an osculating element was set on the nut bearing surface, the thread surface and a contact surface of the object to be fastened. FIG. 4 shows a three dimensional finite element model for the analysis.

In addition, concerning material physical properties, moduli of longitudinal elasticity of the bolt 3 and the nut 1 were set to 200 MPa. Further, Poisson's ratios of the bolt 3 and the nut 1 were set to 0.3. Then, tensile-strength of the bolt 3 was set to 10.9, and that of the nut was set to 8. At this time, initial yield stress of the bolt was set to 790 MPa, and that of the nut was set to 790 MPa.

Further, plastic behavior was assumed to act as an elasto-plastic body having linear curing, and plastic tangent moduli of the bolt 3 and the nut 1 both were set to 2700 MPa. A type of analysis performed was electro-plastic analysis with material nonlinearity and geometric nonlinearity being considered. Further, friction coefficient on the contact surface was set to 0.15, and we assumed that in a fastening process, the friction coefficient did not change.

Then, Table 2 shows analysis items of the fastening structure body 4 of the present embodiment.

**Table 2**

| Analysis items | Value |
|---|---|
| Type of screw | Metric coarse thread |
| Nominal diameter of screw | M 16 |
| Tolerance of screw | 6 H / 6 g |
| Element of model | One-dimensional tetrahedral element |
| Contact surface of an object to be fastened | Osculating element |
| Modulus of longitudinal elasticity of bolt and nut | 200 GPa |
| Poisson's ratio of bolt and nut | 0.3 |
| Tensile-strength of bolt | 10.9 |
| Tensile-strength of nut | 8.8 |
| Initial yield stress of bolt | 790 MPa |
| Initial yield stress of nut | 790 MPa |
| Type of analysis | Elasto-plastic analysis |
| Friction coefficient on the contact surface | 0.15 |

In this case, the number of nodes of the three dimensional finite element model for the nut 1 of the embodiment of the present invention was 17769, and also, the number of elements was 87430. Computation for the analysis was carried out, every time the rotation angle increased by 0.1°, until the computation became divergent, and the computation results were output every increment of 1°. Further, CPU used was a computer system having PENTIUM 4 of 2.4 GHz, and computation time was 72 hours.

Next, the results of analysis for the relation between one rotation angle, and the fastening force and the fastening torque will be described. In the analysis, we studied on three cases where the inclined angle and fastening rotational speed were different as shown in Table 3.

**Table 3**

| Analytical conditions | | | |
|---|---|---|---|
| Name of product | SIN (1) | SIN (2) | SIN (3) |
| Inclination angle | 1.0° | 1.5° | 1.5° |
| Size | M 16 | M 16 | M 16 |
| Tensile-strength | 8 | 8 | 8 |
| Yield stress | B64N64 | B64N64 | B64N64 |
| Modulus of longitudinal elasticity | 206 GPa | 206 GPa | 206 GPa |
| Fixed spring constant | 2 | 2 | 5 |
| Friction coefficient | 0.15 | 0.15 | 0.15 |
| Rotational speed | 0.1 deg/s | 0.1 deg/s | 0.1 des/s |

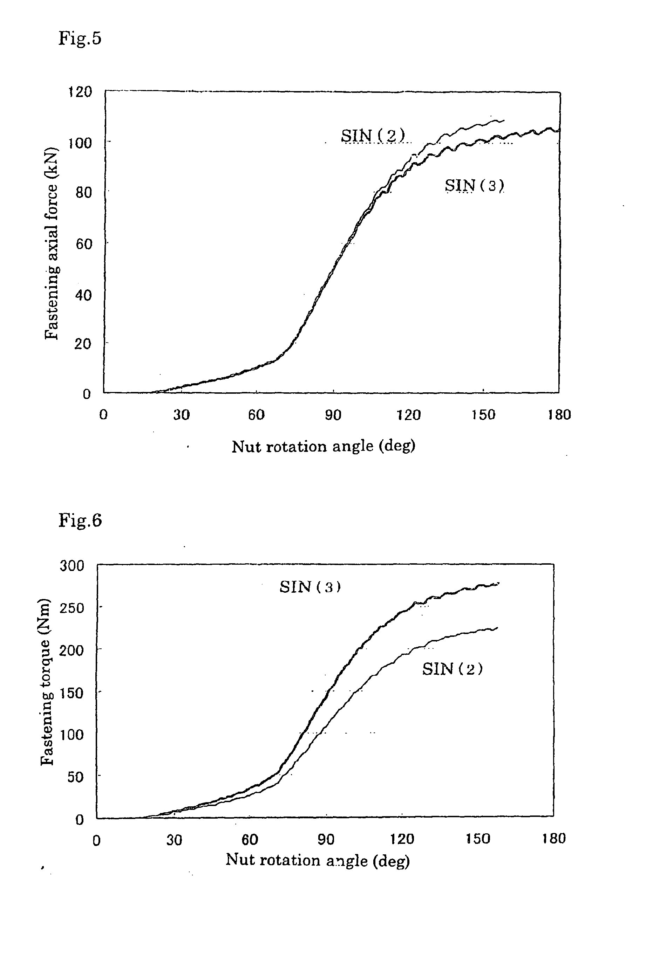

Here, the term "SIN" is an acronym of "Screw Inclined Nut" by which the nut 1 having the inclined inner screw 2 is called, temporarily acronymed by the present inventor. Then, the results of the analysis are apparent from graphs of the computation results shown in FIGS. 5 to 9.

That is, FIG. 5 illustrates the relation between the nut rotation angle and the fastening axial force, and the horizontal axis shows the rotation angle of the nut 1 and the longitudinal axis shows the fastening axial force. In the drawing, the analytical results of the nut (SIN 1) of the embodiment according to the present invention is shown by a thick solid line, and the analytical results of the nut (SIN 2) of another embodiment according to the present invention is shown by a thin line.

Then, in the relation between the axial force and the rotation angle, the axial force is not generated up to the rotation angle of about 10°. It is because the inner screw 2 portion of the nut 1 is inclined at the required angle, so that in an initial step of fastening, the nut bearing surface is inclined. Subsequently, the axial force is generated but slowly increases, as the rotation angle is in the range from about 11° to about 49°.

A rate of increase in the axial force for this section per unit angle is 340 N/deg. As the rotation angle goes beyond 50°, a gradient abruptly becomes steeper. It is because as the bearing surface of the inclined inner screw 2 is moved and the rotation angle reaches 37°, the bearing surface of the nut 1 completely sits on the object to be fastened.

FIG. 6 illustrates the relation between the rotation angle of the nut 1 and the fastening torque. In the drawing, the results of the nut (SIN 3) of the embodiment according to the present invention is shown by a thick solid line, and the results of the nut (SIN 2) described above of the embodiment according to the present invention is shown by a thin line, and the horizontal axis shows the rotation angle and the longitudinal axis shows the fastening torque. It is found that, also in this case, the relation between the rotation angle and the fastening torque exhibits similar characteristics to the case of the relation between the rotation angle and the axial force described above.

Further, the fastening torque is not generated up to the rotation angle of about 10°. It is because a center of axle L of the screw portion of the nut is inclined, so that in an initial step of fastening, the nut bearing surface is inclined. Then, the fastening torque is generated but slowly increases, as the nut 1 is rotated and the rotation angle goes on from about 11° to about 46°.

Then, a rate of increase in the torque for this section per unit angle is 923 N/deg. As the rotation angle goes beyond 46°, a gradient abruptly becomes steeper. It is thought because as the bearing surface of the nut 1 is moved and the rotation angle reaches 46°, the bearing surface of the nut 1 completely sits on the object to be fastened.

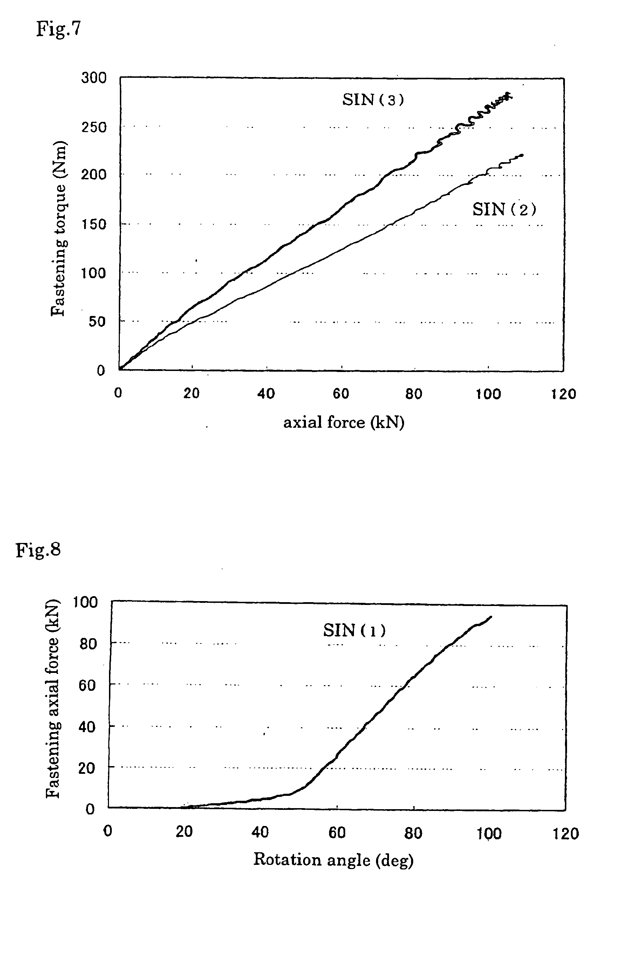

Then, FIG. 7 illustrates the relation between the axial force and the fastening torque, and the horizontal axis shows the axial force and the longitudinal axis shows the fastening torque. As the axial force increases, the fastening torque also uniformly increases. In the drawing, the analytical results of the nut (SIN 3) of the embodiment according to the present invention is shown by a thick solid line, and the analytical results of the nut (SIN 2) of another embodiment according to the present invention is shown by a thin line.
Similarly, FIG. 8 illustrates the relation of the nut 1 of the embodiment of the present invention between the nut rotation angle and the fastening axial force, and the horizontal axis shows the rotation angle and the longitudinal axis shows the fastening axial force. Then, the axial force is not generated up to the rotation angle of about 20°. It is because the inner screw 2 portion of the nut 1 is inclined at the predetermined angle of 1 °, so that in an initial step of fastening, the nut bearing surface is inclined.

Then, when the rotation angle is in the range from about 20° to about 50°, the axial force is generated but slowly increases. A rate of increase in the axial force for this section per unit angle is 300 N/deg. As the rotation angle goes beyond 50°, a gradient abruptly becomes steeper. It is because, as the bearing surface of the screw inclined nut is moved and the rotation angle reaches 50°, the bearing surface of the nut 1 completely sits on the object to be fastened.

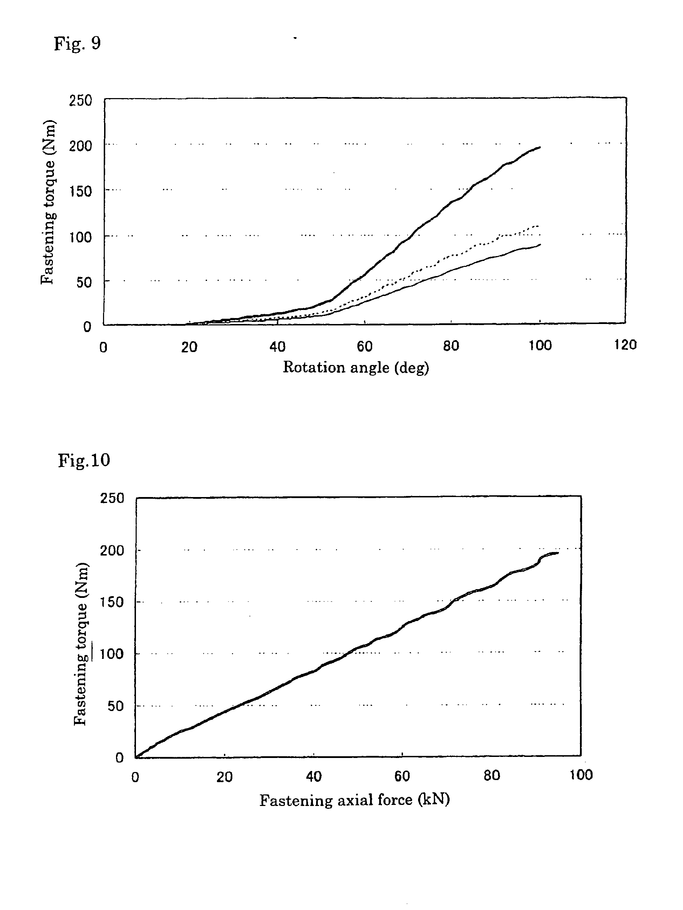

FIG. 9 illustrates the analytical results of the fastening torque and the rotation angle of the nut 1 of the embodiment of the present invention, and the horizontal axis shows the rotation angle of the nut and the longitudinal axis shows the fastening torque. The fastening torque is the sum of torque on the bearing surface and a lead angle of torque on the screw surface.

FIG. 10 illustrates the relation between the axial force and the fastening torque, and the horizontal axis shows the axial force and the longitudinal axis shows the fastening torque. It may be seen that as the axial force increases, the fastening torque also increases uniformly.

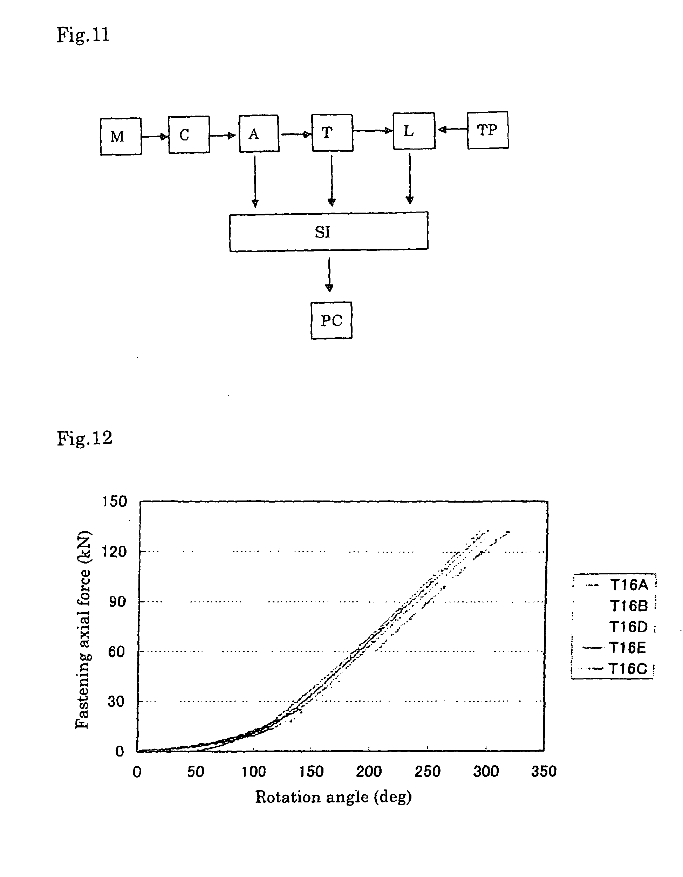

Next, stress evaluation of the nut 1 having the inclined inner screw 2 of the present embodiment, that is, "SIN" described above will be described. The computation results of JIS standard nuts corresponding to the nut 1 are according to graphs shown in FIGS. 12 to 15, and the graphs show stress distribution where the axial force is 50 kN and 100 kN (90 kN), and in the drawings, a unit of color scale is kgf/mm².

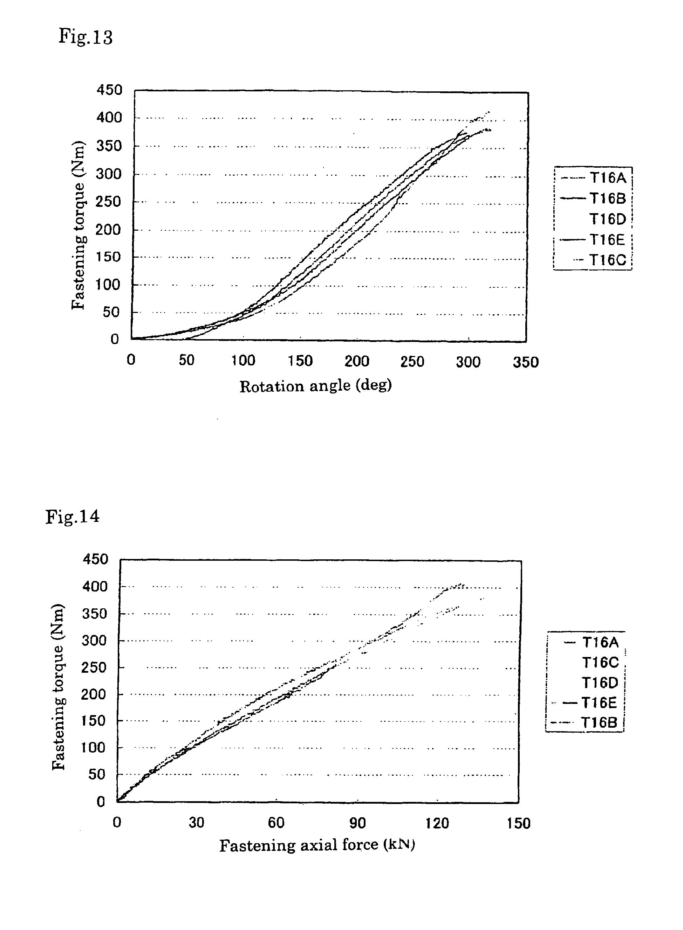

Then, FIG. 12 shows the computation results of stress analysis when the axial force is 50 kN, and it may be seen that stress of 65 kgf/mm² is generated in the vicinity of a surface of the bolt 3 on the left side of a center of axle. FIG. 13 shows the computation results of stress analysis when the axial force is 100 kN, and it is found that when the axial force is 100 kN, stress of 85 kgf/mm² is generated in a considerably wide area.

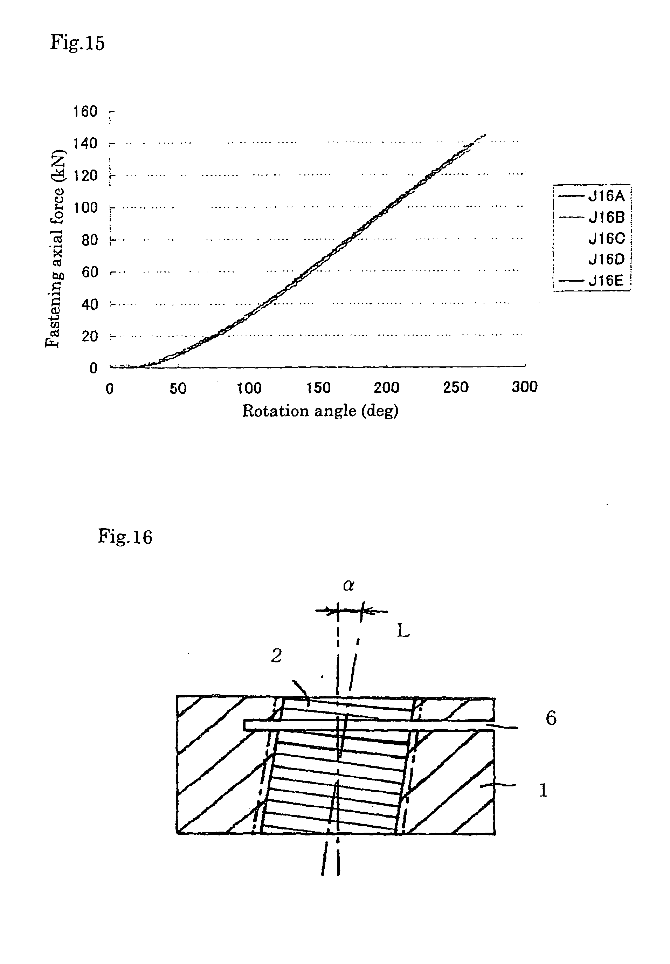

Then, FIGS. 14, 15 show the computation results of stress analysis of JIS standard nuts, when the axial force is 50 kN and 100 kN. The way may be seen that, in JIS standard nuts, stress is generated symmetrically about a center of axle. Now, when the axial force is 100 kN, compared with the stress distribution of JIS standard nuts, stress distribution on the right side of the center of axle is not largely different from that of JIS standard nuts, but it seems that a little larger stress is generated on the left side of the center of axle.

Next, the fastening structure body 4 was tested for loosening. The test was carried out by mounting the fastening structure body 4 (test specimen) on a testing machine, under the following conditions. That is, such fastening structure body 4 was subjected to vibration test for 17 minutes, and when loosening was not observed, return torque was measured.

The testing machine used was a generally known, high-speed screw loosening testing machine. As for the vibration conditions, the number of vibration was 1780 rpm, a stroke of a shaker was 11 mm, an impact stroke was 19 mm, and a total amplitude of vibration was set. Then, it was determined that loosening occurred, when match marks of a bolt under test, a nut under test and a washer were displaced from each other and the washer was able to be rotated by finger. The results are according to the results of the vibration test shown in Table 4.

**Table 4**

| Results of vibration test | | | | |
|---|---|---|---|---|
| Test piece | Name of product under test | Fastening torque | Test results | Return torque |
| 1 | SIN M 16 | 280 Nm | Loosening not observed after 17 minutes | 220 Nm |
| 2 | SIN M 16 | 280 Nm | Loosening not observed after 17 minutes | 230 Nm |
| 3 | SIN M 16 | 280 Nm | Loosening not observed after 17 minutes | 240 Nm |

This loosening test was performed on three samples of the nuts 1 (SIN) of M16 of the embodiment of the present invention. Further, material of the nut 1 of this embodiment used was S45C. Tensile-strength was 8. The fastening torque of the nut 1 (test piece) of this embodiment was set to 280 Nm, and in any case, loosening was not observed. The return torque was in the range between 78.6% and 85.7% of the fastening torque.

Next, fastening test on such fastening structure body 4 (test specimen) was carried out. For this purpose, first, we developed a testing machine to satisfy the test method for fastening of JIS B 1084. This machine can measure the relation among the fastening rotation angle, the fastening axial force and the fastening torque of various fasteners of bolt and nut.

Then, concerning this fastening structure developed, FIG. 11 illustrates a configuration and a signal flow of each apparatus. That is, in the drawing, SG gear motor "TML15-120, 5 kW" from SIGMA GIKEN CO., LTD. is designated by M, a transmission is designated by C, an angle sensor is designated by A, a torque transducer "TP-100KMCB" from KYOWA ELECTRONIC INSTRUMENTS CO., LTD. is designated by T, a washer-type compression load cell "LCW-C-400KN60SA6B" from KYOWA ELECTRONIC INSTRUMENTS CO., LTD. is designated by L, a test piece is designated by TP, a sensor interface "PCD-300A" from KYOWA ELECTRONIC INSTRUMENTS CO., LTD. is designated by SI, and a personal computer is designated by PC, respectively. Measurement accuracy is 0.07% at fastening torque of 1 kN m, 0.1616% at fastening axial force of 400 kN, and 0.58% at fastening rotation angle of 350°.

In the fastening test on this fastening structure body 4, fastening test of an attachment portion of the nut 1 (SIN) of the present embodiment was performed on the two following types. That is,
(1) Five nuts 1 (SIN) of M16 of the present embodiment were tested. These were made of S45C and quenched to tensile-strength 8 (qT), and bolts had tensile-strength 10.9.
(2) Five JIS standard nuts of M16 were tested. These were made of S45C and quenched to tensile-strength 8 (qT), and bolts had tensile-strength 10.9.

Then, concerning the test results, it is apparent that the results were superior, from the test results illustrated by graphs of the fastening axial force shown in FIG. 12, the fastening torque shown in FIG. 13, the relation between the fastening torque and the axial force shown in FIG. 14, and the fastening axial force shown in FIG. 15.

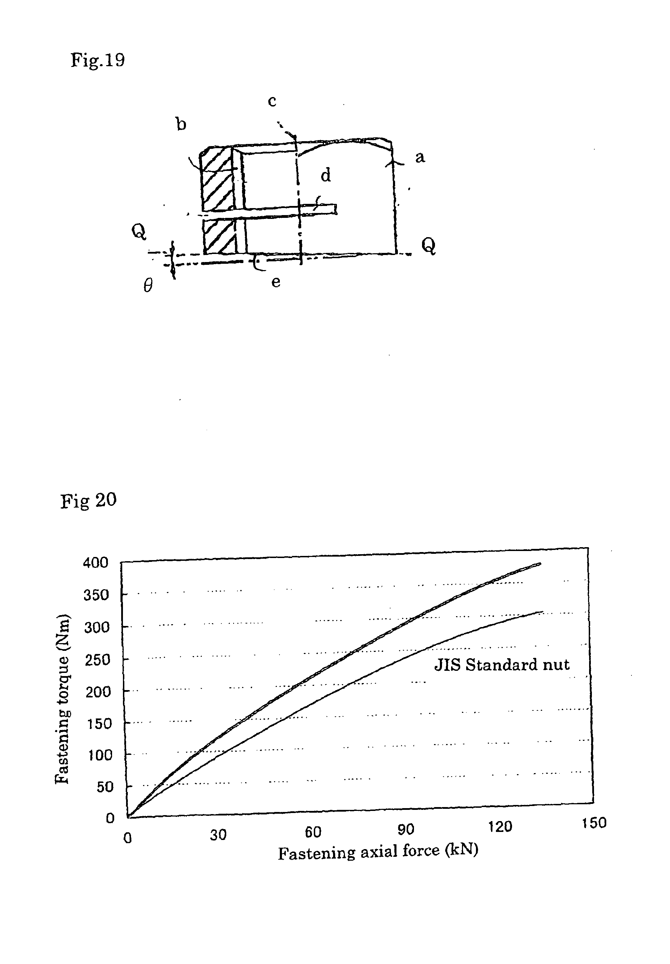

In addition, a graph in FIG. 20 shows comparison of individual averages of the test results of five implementation articles of the present invention and five JIS standard nuts. Then, a characteristic curve was obtained from smoothing using the quartic polynomial approximation technique. As the result, it was found that, in all range of the fastening axial force, a torque mate had larger fastening torque. For example, at the fastening axial force of 30, 60, 90, 120 kN, the fastening torque of the torque mate, compared with the JIS standard nuts, is larger by 36.6%, 25.55%, 21.8%, and 24.4%, respectively.

Because of the above-mentioned, it is apparent that a structure of the fastening structure body 4, which is the implementation body of the present invention, also has an anti-loosening structure. In other words, it can be said that this fastening structure body 4 provides, as an anti-loosening structure, two surfaces, namely, one is the fastening, bearing surface of the bolt 3 and the nut 1, and the other is the coupling surface of a male screw and a female screw (inner screw 2).

That is, anti-loosening capability may be expressed by the product of frictional force on the two surfaces and a radius of the center of friction. The frictional force on the bearing surface is the product of the axial force and the friction coefficient, and the frictional force on a screw surface is the product of component force of the axial force perpendicular to the screw surface and the friction coefficient of the screw surface. Therefore, it is difficult for the bolt 3 and the nut 1 having a large friction coefficient, or the bolt 3 and the nut 1 having a large radius of the bearing surface to loosen.

Here, considering the anti-loosening structure of the screw inclined nut 1 having the inner screw 2 of the present embodiment, the inclined screw of the nut 1 of the embodiment according to the present invention has a feature that provides not only joining on a frank face of the male screw and the female screw of the bolt, but also joining of a peak of the male screw and a valley of the female, by engagement of a screw thread of the inner screw 2.

Therefore, in an initial stage of fastening the nut 1 of the embodiment of the present invention and the bolt 3, when a part of the bearing surface sits on due to rotation of the nut 1, the axial force is generated in the bolt 3, and proportionally to an increase in rotation angle of the nut 1, the axial force is increased, and a sitting area is increased.

At this time, in a process in which the bearing surface is closely-attached, because of an inclination angle of the bearing surface, the nut 1 of the embodiment of the present invention rotates while a center line of rotation shifts from a center line of the bolt 3, and the nut 1 bends the bolt. As the result, in the nut 1 of the embodiment of the present invention, because the center of the nut 1 becomes eccentric, the frank face will be joined while engaging together the peak of the male screw and the valley of the female screw of the inclined side.

Considering this phenomenon based on a torque value, the frictional force generated from contact on the frank face of the nut 1 of the embodiment of the present invention is approximately equal to the frictional force on the frank face of JIS standard nut, but in addition to this, because, due to contact at the peak of the male screw on the side of a semicircle, a screw thread of the male screw bites into the valley of the female screw in a form of wedge, torque will be generated as the product of the frictional force generated from the joining at the peak and a radius of the male screw.

Therefore, the nut having the inclined bearing surface can provide larger torque than JIS standard nut, and after the inclined bearing surface is entirely attached, due to an increase in the axial force, inclination of the bolt is increased, strengthening the joining in a form of wedge. Accordingly, the inclined bearing surface will have a function to enlarge interference of the screw threads and increase the frictional force.

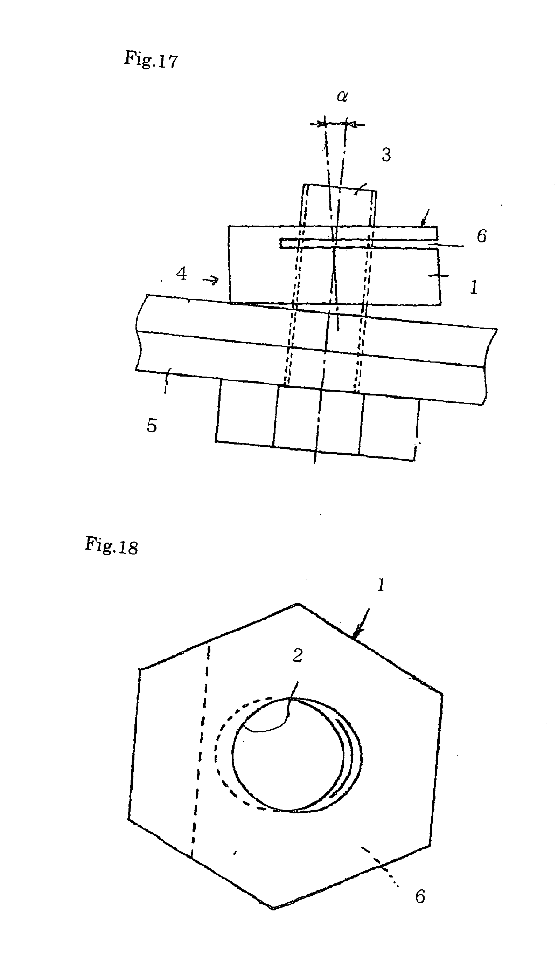

In the invention shown in FIGS. 16 to 19, which is another embodiment of the present invention, a transverse groove 6 is formed in the nut 1 described above in the direction perpendicular to the center line C of the nut 1. Further, in this embodiment, the transverse groove 6 is formed entirely across the inner screw 2 described above.

Then, an anti-loosening nut 1 of this embodiment, even if vibration is applied, does not loosen from a bolt 3, and because of easiness of formation, productivity thereof is superior. That is, the inner screw 2 is formed so that the center line L thereof is inclined relative to the center line C of the nut 1, and when the bolt 3 is screwed onto the inner screw 2, a part of this anti-loosening nut 1 firmly contacts locally with a member 5 to be attached. Therefore, large frictional resistance will be generated, preventing loosening.

Further, the inner screw 2 can be formed, while retaining the nut 1, for example, in the horizontal direction, in such state, by processing while an angle for forming the inner screw 2 being tilted from the center line C of the nut 1 by a predetermined angle α (1° to 6°), so that formation is very easy. Therefore, productivity is superior.

Also, because the anti-loosening nut 1 has the transverse groove 6 formed therein, occurrence of loosening can be more efficiently prevented. It is thought because, due to formation of the transverse groove 6, a screw in the vicinity of the groove 6 will bite into the bolt 3 to firmly fasten locally.

Further, it is thought that vibration transmitted from the bolt 3 or the member 5 to be attached is absorbed by the transverse groove 6, blocking the vibration from being directly transmitted to the entire anti-loosening nut 1.

In addition, in the present embodiment, the transverse groove 6 is formed entirely across the inner screw 2, and thereby the bolt 3 is fastened more firmly, but the present invention is not limited to this, for example, the transverse groove 6 may be formed approximately up to a central portion of the inner screw 2.

Further, in the present embodiment, the transverse groove 6 described above is formed higher from an intermediate height of the nut 1, but the height at which the transverse groove 6 is formed is not limited, and the transverse groove 6 may be formed at the intermediate height of the nut 1 or below it. However, in that case, the fastening force acting on the member 5 to be attached becomes too large, so that removal is apt to be difficult, and therefore the transverse groove 6 is preferably formed higher from the intermediate height of the nut 1.

## Claims

1. A fastening method of a bolt and a nut, comprising:
providing an inner screw of a nut to be inclined at a required angle against a central axis line of the nut;
screwing a bolt onto this inner screw;
in an initial stage of fastening the bolt and the nut, generating axial force in the bolt, when, due to rotation of the nut, a part of a bearing surface of the inner screw of the nut sits on a part of a screw of the bolt; and
enlarging the axial force proportionally to an increase in rotation angle of the nut to also enlarge the sitting area.

2. A fastening method of a bolt and a nut, wherein the nut according to claim 1 has a slit with a required width and a required depth formed in the horizontal direction perpendicular to the central axis line from the side of "-" thereof.

3. The fastening method of a bolt and a nut according to claims 1 and 2, wherein the required angle of the inner screw of the nut described above is preferably set to from 1° to 6°.

4. A fastening structure of a bolt and a nut, the fastening structure being a fastener comprising a nut and a bolt screwed onto the nut, an inner screw of the nut being provided to be inclined at a required angle against a central axis line of the nut, wherein
in an initial stage of fastening the bolt and the nut, axial force in the bolt is generated, when, due to rotation of the nut, a part of a bearing surface of the inner screw of the nut sits on a part of a screw of the bolt; and
the axial force is also enlarged proportionally to an increase in rotation angle of the nut to enlarge the sitting area.

5. A fastening structure of a bolt and a nut, wherein the nut according to claim 4 has a slit with a required width and a required depth formed in the horizontal direction perpendicular to the central axis line from the side of "-" thereof.

6. The fastening structure of a bolt and a nut according to claims 1 and 2, wherein the required angle of the inner screw of the nut described above is preferably set to from 1° to 6°.
